# EUROPÄISCHE PATENTSCHRIFT

(11) **EP 2 347 684 B1**
(45) Veröffentlichungstag und Bekanntmachung des Hinweises auf die Patenterteilung: **25.05.2016**
(21) Anmeldenummer: 11000386.0
(22) Anmeldetag: 19.01.2011
(51) Int. Cl.: A47G 27/04, A47G 27/06, C09J 7/02

(54) **Selbstklebefolie**
Self-adhesive foil
Film adhésif autocollant

(30) Priorität: 20.01.2010 DE 102010005182
(43) Veröffentlichungstag der Anmeldung: 27.07.2011
(73) Patentinhaber: Uzin Tyro AG, 6374 Buochs (CH)
(72) Erfinder: Wigger, Thomas, 6232 Geuensee (CH)
(74) Vertreter: Spranger, Stephan

(56) Entgegenhaltungen:
- EP-A2- 0 816 459
- WO-A1-2006/045435
- WO-A2-2008/119003
- DE-U1- 20 014 455

## Beschreibung

Die Erfindung betrifft eine Selbstklebefolie, zum Verkleben eines Belags, insbesondere eines Bodenbelags, einer Sockelleiste oder eines Wandbelags, beispielsweise mehrteilig, auf einem Untergrund, insbesondere einem Fußboden, einer Treppe oder einer Wand, mit einer Trägerschicht, welche an einer oberen, dem Belag zugewandten Oberfläche und an einer unteren, dem Untergrund zugewandten Oberfläche mit einer Haftkleberbeschichtung beschichtet ist, gemäß dem Oberbegriff des Anspruchs 1.

Beläge können beispielsweise elastische Beläge für Boden oder Wand sein, welche in Einzelelementen aneinander stoßend verlegt werden können, oder es können auch Sockelleisten sein. Elastische Beläge und Sockelleisten weisen prozesstechnisch bedingt eine mehr oder weniger stark ausgeprägte Neigung zu Dimensionsänderungen - insbesondere zu Schrumpf, Verformungen, Aufwölbungen - auf. Dies kann insbesondere bei Belägen, die in Einzelelementen verlegt werden, z.B. Designbeläge oder PVC-Vliesen, zu unerwünschter Fugenbildung führen. Die Dimensionsänderungen von Sockelleisten können zu hohlen Innenecken und/oder zu Nahtfugen führen.

Generell werden Selbstklebefolien mit beidseitiger Haftkleberbeschichtung heutzutage in unterschiedlichen Breiten für die Verklebung beispielsweise von Bodenbelägen und/oder Sockelleisten z. B. im Bereich des Innenausbaus verwendet. Dabei kann es insbesondere dann zu Schwierigkeiten kommen, wenn Beläge, welche Weichmacher enthalten, mit solchen Selbstklebefolien/- bändem verklebt werden. Die Weichmacher bzw. ähnliche Stoffe können dabei aus dem zu verklebenden Material in den Kleber und/oder den Untergrund diffundieren und durch diese Stoffmigration und die dadurch eintretenden Materialänderungen die belagsinhärente Neigung zu Dimensionsänderungen verstärken, z.B. bei einem PVC-Designbelag aus einzelnen, aneinander gefügten Belagselementen, so dass es insbesondere langfristig beispielsweise zu Fugen zwischen den Belagselementen und/oder zu Verformungen, wie etwa Aufwölbungen in einem derart großflächig verlegten Belag kommen kann. Dies ist selbstverständlich nicht erwünscht.

Heute werden gemäß Stand der Technik elastische Beläge in Einzelelementen, insbesondere Designbeläge und/oder, PVC-Vliesen, im Allgemeinen unter Verwendung von Nassklebern (Dispersion und/oder Reaktiv zwei Komponenten) auf Untergründe geklebt. Beispielsweise kommen dabei Produkte des Unternehmens Uzin Utz AG zum Einsatz, beispielsweise unter der Bezeichnung Uzin KE 2000 S, Uzin KE 430 oder Uzin KE 421.

PVC-Sockelleisten, Treppenbeläge oder Wandbeläge werden heute in der Regel mit zumeist lösemittelhaltigen Kontaktklebern, z.B. Uzin GN 222, Uzin DK 700, geklebt. Treppenbeläge und teilweise auch Wandbeläge werden teilweise auch mit Nassklebern geklebt.

Die Verwendung von Nassklebern und Kontaktkleber ist relativ aufwändig, außerdem treten dabei teilweise hohe VOC-Emissionen und/oder teilweise starke Geruchsemissionen auf. Nasskleber weisen zudem oft eine zu geringe Anfangshaftung, ein schlechtes Eindruckverhalten während der Abbindphase und/oder lange Wartezeiten bis zur Begehbarkeit und bis zur Belastbarkeit auf. Die Vermeidung von möglicher Migration von Weichmachern aus den Belägen ist dabei auch nicht möglich.

Für die Bodenbelagsverklebung oder für die Verklebung von Sockelleisten kommen heute auch schon doppelseitige Selbstklebefolien/-bänder zum Einsatz, beispielsweise Produkte des Unternehmens Uzin Utz AG mit den Produktbezeichnungen SIGAN 1, SIGAN 2 oder UZIN CONTACT. Bei solchen Selbstklebefolien/-bändern ist zwar die Verarbeitbarkeit gegenüber der Verwendung von Nassklebern stark verbessert und auch ist damit üblicher Weise eine rasche Belastbarkeit nach der Verklebung gegeben, aber die Problematik der Dimensionsänderung aufgrund von Weichmachermigration aus den Belägen tritt dabei nach wie vor auf bzw. wird durch die dabei zum Einsatz kommenden Selbstklebematerialien, d.h. Trockenklebstoffe, aufgrund der dadurch noch vermehrten Migration noch eher verstärkt.

Beispielsweise im Bereich der Lebensmittelverpackungen gibt es bereits Ansätze, bei welchen z. B. Sperrschichten bei Folien eingesetzt werden, wobei durch die Sperrschichten die (übermäßige) Migration von Stoffen, z.B. Weichmachern, bzw. Gasen zwischen einzelnen Schichten vermieden werden soll. Diese Sperrschichten sind jedoch oft nicht ausreichend, um Weichmacher, wie sie in Elastischen Belägen in Art und Umfang eingesetzt werden, in genügendem Masse abzusperren. Selbst wenn so gestaltete Folienträger als Selbstklebefolie ausgerüstet würden, könnte das geschilderte Problem der erhöhten Dimensionsänderungen aufgrund von Weichmachermigration bei der Belagsverlegung mit Trockenklebem nur unvollständig gelöst werden. Es könnte dabei nach wie vor eine zu große Menge Weichmacher aus dem Belag in den Klebstoff und/oder in den Untergrund weg migrieren, wodurch die geschilderten Dimensionsänderungen nach wie vor auftreten könnten.

Die deutsche Patentschrift DE 197 16 996 C1 beschreibt ein Verfahren zur Herstellung eines druckempfindlichen doppelseitigen Klebebands auf Kautschukbasis, bei welchem mittels Koextrusion auf einem Trägermaterial eine zusätzliche Sperrschicht aufgelegt wird, welche dann wiederum vollflächig jeweils mit Schmelzhaftkleber beschichtet wird. Von den beschriebenen Schmelzklebstoffen ist bekannt, dass sie in erheblichem Masse Weichmacher aufnehmen und Stoffmigration zulassen und dabei selber sehr stark ihre physikalischen Eigenschaften ändern. Mit diesem Aufbau kann das Problem der Dimensionsänderungen also nicht gelöst werden.

Die deutsche Offenlegungsschrift DE 1 544 777 betrifft die Verklebung von weichmacherhaltigen Stoffen mit anderen weichmacherhaltigen oder weichmacherfreien Stoffen, wobei dort zwischen den Stoffen eine weichmacherundurchlässige Folie, z.B. eine Metallfolie aus Aluminium, eingeklebt wird, welche die Wanderung von Weichmacher verhindern soll.

Die deutsche Offenlegungsschrift DE 100 40 966 A1 beschreibt eine Selbstklebefolie zur Bodenbelagsverlegung und betrifft oben erwähnte Produkte des Unternehmens Uzin Utz AG, dem Mutteruntemehmen der Anmelderin. Die beschriebene Selbstklebefolie kann optional so gestaltet sein, dass die dortige Trägerschicht einen Abschnitt als Bremsschicht gegen den ungehinderten Durchgang von Additiven und/oder Weichmachern aufweist. Wie Untersuchungen der Anmelderin ergeben haben (siehe weiter unten), hat das entsprechende Vergleichsmuster 1 aber nicht die Eigenschaften, welche das Problem der Dimensionsänderungen bereits voll zufrieden stellend lösen könnten.

Die europäische Patentanmeldung EP 0 816 459 A2 beschreibt hoch elastisch verformbare Klebefolienstreifen, welche so eine wieder lösbare Verklebung durch Ziehen in Richtung der Verklebungsebene rückstandsfrei und beschädigungslos durch Ablösen auf diese Art ermöglichen sollen. Dazu werden für Konzentrationsänderungen in einzelnen Schichten der entsprechenden Klebefolienstreifen Konzentrationsänderungsobergrenzen der einzelnen Rezepturbestandteile innerhalb dieser Schichten angegeben.

Es ist die Aufgabe der vorliegenden Erfindung, eine Selbstklebefolie vorzusehen, welche die Nachteile des Standes der Technik überwindet, und insbesondere eine Selbstklebefolie vorzusehen, welche auf konstruktiv einfache Weise eine hohe Formstabilität bietet, insbesondere eine hohe Formstabilität von damit verklebten weichmacherhaltigen Belägen über längere Zeiträume.

Diese Aufgabe wird erfindungsgemäß mit einer Selbstklebefolie mit den Merkmalen gemäß dem Anspruch 1 gelöst. Bevorzugte Ausführungsformen der Erfindung sind in den Unteransprüchen definiert.

Die erfindungsgemäße Selbstklebefolie dient zum Verkleben eines Belags, insbesondere eines Bodenbelags, einer Sockelleiste oder eines Wandbelags, beispielsweise mehrteilig in Einzelelementen vorliegend, auf einem Untergrund, insbesondere einem Fußboden, einer Treppe oder einer Wand. Es kann dabei eine Anwendung denkbar sein, bei welcher beispielsweise mehrteilige PVC-Designbelagselemente auf einem Fußboden angeklebt werden oder Sockelleisten im Bereich des Sockels von Wänden im Innenausbau angeklebt werden. Die zu verklebenden Beläge können dabei also insbesondere Designbeläge sein, welche einen hohen Weichmacheranteil zumindest in ihrer Basisschicht aufweisen können. Die erfindungsgemäße Selbstklebefolie weist eine Trägerschicht auf, welche an einer oberen, dem Belag zugewandten Oberfläche und an einer unteren, dem Untergrund zugewandten Oberfläche mit einer Haftkleberbeschichtung beschichtet ist. Erfindungsgemäß weist die Selbstklebefolie eine Sperrschicht auf, welche für Weichmacher undurchlässig ist. Ferner ist die Selbstklebefolie erfindungsgemäß so gestaltet, dass die Haftkleberbeschichtung zumindest einer der Oberflächen begrenzt aufnahmefähig ist für Weichmacher und dabei eine Weichmacheraufnahmefähigkeit von erfindungsgemäß lediglich bis zu 20 g/m² aufweist.

Bevorzugt kann die begrenzte Weichmacheraufnahmefähigkeit im Bereich von 2 g/m² bis zu 20 g/m² liegen, besonders bevorzugt im Bereich von 5 g/m² bis zu 15 g/m².

### Messmethode zur Weichmacheraufnahmefähigkeit:

Die begrenzte Weichmacheraufnahmefähigkeit von erfindungsgemäß nur bis zu 20 g g/m² der Haftkleberbeschichtung zumindest einer der Oberflächen wird bestimmt unter Verwendung eines standardisierten Belags mit einem bestimmten Weichmachergehalt und einer bestimmten Weichmacherabgabe. Die angegebenen Werte beziehen sich dabei auf einen Belag, welcher hinsichtlich dieser Parameter z.B. dem Belag unter der Produktbezeichnung SCALA 55 des Unternehmens Armstrong DLW GmbH als Klebepartner entspricht. Zur Bestimmung der Weichmacheraufnahmefähigkeit wird die Selbstklebefolie mit der zu prüfenden Haftkleberbeschichtung auf den angegebenen Belag mit den entsprechenden Standardwerten des Weichmachergehalts und der Weichmacherabgabefähigkeit aufgeklebt. Die verwendeten Stückgrößen liegen dabei jeweils in der Größenordnung von etwa 100 cm². Nach einem gewissen Alterungsvorgang, z. B. 7 Tage bis 70° C, wird durch Gewichtsdifferenzmessung erfasst, wie viel Masse der entsprechende Belag an die Haftkleberbeschichtung der getesteten Selbstklebefolie abgibt. Somit ist die erfindungsgemäße Weichmacheraufnahmefähigkeit bestimmbar.

Durch die erfindungsgemäße Gestaltung der Selbstklebefolie mit einer Kombination aus weichmacherundurchlässiger Sperrschicht und begrenzter Weichmacheraufnahmefähigkeit von lediglich bis zu 20 g/m² der Haftkleberbeschichtung zumindest einer der Oberflächen der Selbstklebefolie kann eine Verbesserung der Klebeeigenschaften einer solchen Selbstklebefolie erfindungsgemäß erreicht werden. Insbesondere können dadurch die Nachteile des Standes der Technik überwunden werden, nämlich insbesondere speziell die großen Dimensionsänderungen durch Weichmachermigration vermieden werden. Der Grund dafür liegt darin, dass erfindungsgemäß nicht nur eine Sperrschicht vorgesehen ist, sondern darüber hinaus auch die Weichmacheraufnahmefähigkeit entsprechend begrenzt ist, so dass der Weichmacher nicht aus dem Belag oder dem Untergrund in die Haftkleberbeschichtung der erfindungsgemäßen Selbstklebefolie in so großem Maß gelangen kann, dass durch entsprechenden Verlust an Weichmacher in dem Belag bzw. dem Untergrund es dort zu einer großen Dimensionsänderung kommen kann. Der Weichmacher kann so länger bzw. generell in höherem Maß im Belag bzw. im Untergrund verbleiben, so dass die mit einer Weichmachermigration üblicherweise verbundenen Dimensionsänderungen ganz ausbleiben oder wesentlich geringer ausfallen als bei der Verwendung von Selbstklebefolien des Standes der Technik, welche keine erfindungsgemäße Sperrschicht aufweisen und mit keiner erfindungsgemäß reduzierten Weichmacheraufnahmefähigkeit der Haftkleberbeschichtung zumindest einer der Oberflächen dort versehen sind.

Um insbesondere die Dimensionsänderung des Belags zuverlässig kontrollieren zu können, weist gemäß einer bevorzugten Ausführungsform die erfindungsgemäße Selbstklebefolie eine Haftkleberbeschichtung der oberen Oberfläche auf, welche dort begrenzt aufnahmefähig für Weichmacher ist. Insbesondere die obere Oberfläche ist ja in unmittelbarem Kontakt mit dem Belag, so dass dort die Dimensionsänderungen des Belags besonders effektiv kontrollierbar sind.

Beid der erfindungsgemäßen Selbstklebefolie, besteht zumindest die Haftkleberbeschichtung der oberen Oberfläche aus einem solchen Haftkleber besteht, welcher im Bereich von 10 Gew.-% bis zu 50 Gew.-% Weichmacher in seiner Trockensubstanz enthält, bevorzugt im Bereich von 15 Gew.-% bis zu 40 Gew.-% Weichmacher in seiner Trockensubstanz enthält. Mit diesem definierten Weichmachergehalt in der Trockensubstanz der Haftkleberbeschichtung zumindest der oberen Oberfläche kann besonders effektiv sichergestellt werden, dass beispielsweise die Differenz an Weichmacher im Belag und in der Haftkleberbeschichtung der entsprechenden Oberfläche der erfindungsgemäßen Selbstklebefolie eher gering eingestellt ist. Somit ist der Unterschied im Gefälle der Gewichtsprozente des Weichmachergehalts geringer, was die unerwünschte Migration von Weichmacher weiter erfindungsgemäß bevorzugt vorteilhaft verringern kann.

Anzumerken ist, dass allgemein die begrenzte Weichmacheraufnahmefähigkeit und der Weichmachergehalt der Haftkleberbeschichtung der oberen Oberfläche, wie oben erläutert, erfindungsgemäß eingestellt sein kann, aber auch in Kombination die entsprechenden Werte für die Haftkleberbeschichtung der unteren Oberfläche der erfindungsgemäßen Selbstklebefolie zum Untergrund hin entsprechend gewählt sein können. Somit kann auch eine mögliche Beeinflussung durch Migration von Weichmacher in/aus dem Untergrund erfindungsgemäß einfach kontrollierbar sein.

Die Haftkleberbeschichtung zumindest einer der Oberflächen der erfindungsgemäßen Selbstklebefolie besteht aus einem Haftklebermaterial, welches ausgewählt ist aus der Gruppe bestehend aus Haftklebstoffen basierend auf Acrylat, Vinylacetat, Vinylacetat-Ethylen und/oder deren Mischungen und/oder deren Copolymerisate.

Die Trägerschicht der erfindungsgemäßen Selbstklebefolie kann beispielsweise auch mehrschichtig aufgebaut sein.

Insbesondere bevorzugt kann die Sperrschicht ein Teil der Trägerschicht sein. Dabei kann besonders bevorzugt die Sperrschicht auf zumindest einer Seite der Trägerschicht angeordnet sein, bevorzugt auf deren oberen Seite, welche dem Belag zugewandt ist.

Auch kann die Sperrschicht beispielsweise bevorzugt als Zwischenschicht zwischen mehreren Schichten der Trägerschicht angeordnet sein.

Generell kann durch entsprechende Gestaltung des Schichtaufbaus beispielsweise die Stabilität der erfindungsgemäßen Selbstklebefolie gegen Dimensionsänderungen der Selbstklebefolie selbst entsprechend ausgewählt sein.

Die Sperrschicht ist erfindungsgemäß eine anorganische Metallschicht und/oder eine Oxidschicht und/oder eine Metalloxidschicht, aus Material ausgewählt aus der Gruppe Aluminium, Gold, Silber, Nickel, Kupfer, Chrom, Titan, Aluminiumoxid, Siliziumoxid, Aluminium-Silizium-Oxid sowie weiteren geeigneten Metalloxiden/Mischoxiden. Diese Materialien können beispielsweise durch Bedampfen aufgebracht werden oder als Folie kaschiert werden. Mit solchen Sperrschichten ist auf konstruktiv einfache Weise eine gleichmäßig dünne und formstabile Gestaltung der Selbstklebefolie erfindungsgemäß bevorzugt möglich.

Bevorzugt kann die Trägerschicht der erfindungsgemäßen Selbstklebefolie aus einem Polymermaterial bestehen, bevorzugt aus einem Polymermaterial aus der nicht abgeschlossenen Gruppe Polyethylen, Polypropylen, Polyamid (aliphatisch, aromatisch), Polyester (Aaliphatisch, aromatisch), Polyethylenporpylen, Polyethylenterephthalat, Polylactid, Polymethylmethacrylat, Polyolefine, Polyvinylbutyral oder Polyvinylchlorid. Die Verwendung von Materialien aus der nicht abgeschlossenen Gruppe Polycarbonat, Polyacrylsäureester, Polyacrylnitril, Polyamidimid, Polybutylacrylat, Polyesteramid, Polyetherimid, Polyetherketon, Polyethercarbonat, Polyimid, Polyacrylesteramid, Polyoxymethylen, Polyphenylvinyl. Polystyrol, Polyurethan, Polyvinylacetat, Polyvinylalkohol oder Polyvinylfluorid könnten gegebenenfalls je nach Anwendung auch denkbar sein.

Eine zuverlässige Sperrwirkung bei gleichzeitig möglichst einfacher und flexibler Gestaltung mit ausreichender mechanischer Stabilität ergibt sich für die Selbstklebefolie erfindungsgemäß mit der Sperrschicht in Form einer Metallschicht und/oder einer Oxidschicht und/oder eine Metalloxidschicht, welche eine Dicke von mindestens 10 nm bis zu 50 µm aufweist.

Je nach Anwendung kann die erfindungsgemäße Selbstklebefolie zweckmäßig eine Breite in einem Bereich von 30 mm bis 2000 mm aufweisen, bevorzugt in einem Bereich von 500 mm bis 1500 mm und bevorzugter in einem Bereich von 600 mm bis 1000 mm. Dabei kann die Breite bei Verwendung für Treppen besonders bevorzugt in einem Bereich von 100 mm bis 500 mm liegen, insbesondere bevorzugt in einem Bereich von 150 mm bis 350 mm liegen, bei Verwendung für Sockelleisten kann die Breite besonders bevorzugt in einem Bereich von 20 mm bis 150 mm liegen, insbesondere bevorzugt in einem Bereich von 30 mm bis 100 mm liegen und bei Verwendung auf Böden oder Wänden kann die Breite besonders bevorzugt mindestens 350 mm betragen. Diese Breiten erlauben eine einfache Anwendbarkeit beim Verlegevorgang der so bevorzugt gestalteten erfindungsgemäßen Selbstklebefolie. Je nach Anwendung kann somit eine geeignete Verarbeitungsbreite gegeben sein.

Um eine mögliche rückstandsfreie Wiederablösbarkeit der erfindungsgemäßen Selbstklebefolie zu ermöglichen, kann die untere Oberfläche eine Haftkleberbeschichtung mit geringerer Haftstärke als die Haftstärke der Haftkleberbeschichtung an der oberen Oberfläche aufweisen. Es kann aber auch beispielsweise bei der Verwendung für Treppen oder Sockelleisten zweckmäßig sein, dass die untere Oberfläche eine Haftkleberbeschichtung mit größerer Haftstärke als die Haftstärke der Haftkleberbeschichtung an der oberen Oberfläche aufweist, um dort beispielsweise die Verklebung auf unebenen Untergründen und/oder unter mechanischer Trittbelastung weiter zu verbessern.

Die Haftstärke kann dabei unter Messung der Haftkraft bestimmt werden gemäß der Norm DIN EN 1939.

Um die Verarbeitbarkeit der erfindungsgemäßen Selbstklebefolie auf einfache konstruktive Weise zu verbessern, kann zumindest die Haftkleberbeschichtung der oberen Oberfläche mit einer entfernbaren Abdeckschicht versehen sein.

Auch kann die erfindungsgemäße Selbstklebefolie zweckmäßig zu einer Rolle gewickelt sein und so vertrieben werden.

Die Erfindung wird im Folgenden anhand der beispielhaft erläuterten Ausführungsformen näher beschrieben werden.

Beispielhaft wurden zwei Muster einer erfindungsgemäß gestalteten Selbstklebefolie im Vergleich zu herkömmlichen Selbstklebefolien des Standes der Technik hinsichtlich der Weichmacheraufnahmefähigkeit sowie hinsichtlich der Dimensionsänderungen untersucht.

Das erste Muster der erfindungsgemäßen Selbstklebefolie hatte folgenden Schichtaufbau (von oben, d.h. in der Anwendung dem Belag zugewandt, nach unten, d.h. in der Anwendung dem Untergrund zugewandt):

**Muster 1:**

| | |
|---|---|
| Abdeckschicht: | Beidseitig silikonisiertes Schutzpapier |
| Obere Haftkleberbeschichtung: | Acrylat-Haftkleber |
| Sperrschicht: | Aluminium-Metallschicht |
| Trägerschicht: | Polyestermaterial |
| Untere Haftkleberbeschichtung: | Acrylat-Haftkleber |

Das zweite Muster der erfindungsgemäßen Selbstklebefolie hatte folgenden Schichtaufbau (von oben, d.h. in der Anwendung dem Belag zugewandt, nach unten, d.h. in der Anwendung dem Untergrund zugewandt):

**Muster 2:**

| | |
|---|---|
| Abdeckschicht: | Beidseitig silikonisiertes Schutzpapier |
| Obere Haftkleberbeschichtung: | Acrylat-Haftkleber |
| Trägerschicht a: | Polyestermaterial |
| Sperrschicht: | Aluminium-Metallschicht |
| Trägerschicht b: | Polyestermaterial |
| Untere Haftkleberbeschichtung: | Acrylat-Haftkleber |

Als Vergleichsmuster des Standes der Technik wurden folgende Produkte untersucht: UZIN, SIGAN 1 (Vergleichsmuster 1), THOMSIT, DT 100 (Vergleichsmuster 2), BOSTIK, NIBOTAPE COMPLETE (Vergleichsmuster 3), GPI 374614 (Vergleichsmuster 4), UZIN, CONTACT (Vergleichsmuster 5).

Die Weichmacheraufnahmefähigkeit wurde dabei gemäß der weiter oben angegebenen Methode mit einem Belag der Produktbezeichnung SCALA 55 des Unternehmens Armstrong DLW GmbH als Klebepartner bestimmt. Zur Bestimmung der Weichmacheraufnahmefähigkeit wird die Selbstklebefolie mit der zu prüfenden Haftkleberbeschichtung auf den angegebenen Belag mit den entsprechenden Standardwerten des Weichmachergehalts und der Weichmacherabgabefähigkeit aufgeklebt. Die verwendeten Stückgrößen liegen dabei jeweils in der Größenordnung von etwa 100 cm². Nach einem Alterungsvorgang über 7 Tage bei 70° C wird durch Differenzwägung die Weichmacheraufnahmefähigkeit der Muster bestimmt.

Die Dimensionsänderungen wurden dabei zum einen teilweise gemäß der Norm DIN EN 1903 bestimmt und auch gemäß einer individuellen Methode der Anmelderin jeweils unter Verwendung des Belags der Produktbezeichnung SCALA 55 des Unternehmens Armstrong DLW GmbH als Klebepartner bei der Bodenbelagsanwendung und jeweils unter Verwendung des Belags der Produktbezeichnung WL 60 des Unternehmens Döllken als Klebepartner bei der Sockelleistenanwendung. Bei der individuellen Methode der Anmelderin wurde ein Alterungsvorgang über 7 Tage bei einer Temperatur von 70° C simuliert und durchlaufen (siehe ebenfalls die Methode oben) und bei der Messung gemäß der Norm DIN EN 1903 wurde ein Alterungsvorgang über 4 entsprechend normgemäße Prüfzyklen simuliert und durchlaufen.

Die Ergebnisse diesbezüglich sind in den folgenden Tabellen zusammengefasst.

Bodenbelagsanwendung (Belag SCALA 55, Armstrong DLW GmbH), Tabelle 1:

| | **Produkt** | | | | |
|---|---|---|---|---|---|
| | Muster 1 (Selbstklebefolie gemäß Erfindung) | Vergleichsmuster 1 | Vergleichsmuster 2 | Vergleichsmuster 3 | Vergleichsmuster 4 |
| Spezifische Weichmacheraufnahmefähigkeit in g/m² | 14,68 | 31,66 | 26,76 | 31,10 | 23,03 |
| Dimensionsänderungen gemäß DIN EN 1903 | -0.10 % | -0,24 % | -0,18 % | - | - |
| Dimensionsänderungen gemäß individueller Methode | -0.27 % | -0,62 % | -0,48 % | -0,68 % | -0,41 % |

Die obige Tabelle bezieht sich auf die Anwendung der erfindungsgemäßen Selbstklebefolie im Bereich der Bodenbelagsverlegung unter Verwendung von Bodenbelägen.

Zusätzlich wurde noch in gleicher Weise die Anwendung der erfindungsgemäßen Selbstklebefolie im Bereich der Sockelleistenverlegung untersucht.

Sockelleistenanwendung (Belag WL 60 des Unternehmens Döllken), Tabelle 2:

| | **Produkt** | |
|---|---|---|
| | Muster 2 (Selbstklebefolie gemäß Erfindung) | Vergleichsmuster 5 |
| Spezifische Weichmacheraufnahmefähigkeit in g/m² (gemessen mit Belag SCALA 55, Armstrong DLW GmbH) | 15,28 | 40,92 |
| Dimensionsänderungen gemäß DIN EN 1903 | -0,10 % | -0.58 % |
| Dimensionsänderungen gemäß individueller Methode | -0,26 % | -0.58 % |

Die Beispiele und Vergleichsuntersuchungen gemäß den obigen Tabellen zeigen, dass bei einer Selbstklebefolie gemäß der Erfindung deutlich bessere Dimensionsstabilitäten erreicht werden können, verglichen zu den Selbstklebefolien/Sockelbändern des Standes der Technik.

## Patentansprüche

1. Selbstklebefolie, zum Verkleben eines Belags, insbesondere eines Bodenbelags, einer Sockelleiste oder eines Wandbelags, beispielsweise mehrteilig, auf einem Untergrund, insbesondere einem Fußboden, einer Treppe oder einer Wand, mit einer Trägerschicht, welche an einer oberen, dem Belag zugewandten Oberfläche und an einer unteren, dem Untergrund zugewandten Oberfläche mit einer Haftkleberbeschichtung beschichtet ist,
**dadurch gekennzeichnet, dass**
die Selbstklebefolie eine Sperrschicht aufweist, welche für Weichmacher undurchlässig ist, wobei die Sperrschicht eine anorganische Metallschicht, und/oder eine Oxydschicht und/oder eine Metalloxydschicht ist, aus Material, ausgewählt aus der Gruppe Aluminium, Gold, Silber, Nickel, Kupfer, Chrom, Titan, Aluminiumoxid, Siliziumoxid, Aluminiumsilizium-oxid (bedampft oder als Folie), und wobei die Metallschicht und/oder die Oxydschicht und/oder die Metalloxydschicht eine Dicke von mindestens 10 nm bis zu 50 µm aufweist, dass die Haftkleberbeschichtung zumindest einer der Oberflächen aus einem Haftklebermaterial besteht, welches ausgewählt ist aus der Gruppe bestehend aus Haftklebstoffe basierend auf Acrylat, Vinylacetat, Vinylacetat-Ethylen und/oder deren Mischungen und/oder deren Copolymerisate, dass zumindest die Haftkleberbeschichtung der oberen Oberfläche aus einem solchen Haftkleber besteht, welcher im Bereich von 10 Gew.-% bis zu 50 Gew.-% Weichmacher in seiner Trockensubstanz enthält, und dass die Haftkleberbeschichtung zumindest einer der Oberflächen begrenzt aufnahmefähig ist für Weichmacher mit einer Weichmacheraufnahmefähigkeit von bis zu 20 g/m², gemessen nach der in der Beschreibung angegebenen Messmethode zur Weichmacheraufnahmefähigkeit.

2. Selbstklebefolie nach Anspruch 1, **dadurch gekennzeichnet, dass** die begrenzte Weichmacheraufnahmefähigkeit im Bereich von 2 g/m² bis zu 20 g/m² liegt, bevorzugt im Bereich von 5 g/m² bis zu 15 g/m² liegt.

3. Selbstklebefolie nach Anspruch 1 oder 2, **dadurch gekennzeichnet, dass** die Haftkleberbeschichtung der oberen Oberfläche begrenzt aufnahmefähig für Weichmacher ist.

4. Selbstklebefolie nach einem der Ansprüche 1 bis 3, **dadurch gekennzeichnet, dass** zumindest die Haftkleberbeschichtung der oberen Oberfläche aus einem solchen Haftkleber besteht, welcher im Bereich im Bereich von 15 Gew. % bis zu 40 Gew. % Weichmacher in seiner Trockensubstanz enthält.

5. Selbstklebefolie nach einem der Ansprüche 1 bis 4, **dadurch gekennzeichnet, dass** die Trägerschicht mehrschichtig ist.

6. Selbstklebefolie nach einem der Ansprüche 1 bis 5, **dadurch gekennzeichnet, dass** die Sperrschicht ein Teil der Trägerschicht ist.

7. Selbstklebefolie nach Anspruch 6, **dadurch gekennzeichnet, dass** die Sperrschicht auf zumindest einer Seite der Trägerschicht angeordnet ist, bevorzugt auf einer oberen Seite, welche dem Belag zugewandt ist.

8. Selbstklebefolie nach Anspruch 6, **dadurch gekennzeichnet, dass** die Sperrschicht als Zwischenschicht zwischen mehreren Schichten der Trägerschicht angeordnet ist.

9. Selbstklebefolie nach einem der Ansprüche 1 bis 8, **dadurch gekennzeichnet, dass** die Trägerschicht aus einem Polymermaterial besteht, bevorzugt aus einem Polymermaterial aus der Gruppe Polyethylen, Polypropylen, Polyamid (aliphatisch, aromatisch), Polyester (Aaliphatisch, aromatisch), Polyethylenporpylen, Polyethylenterephthalat, Polylactid, Polymethylmethacrylat, Polyolefine, Polyvinylbutyral oder Polyvinylchlorid.

10. Selbstklebefolie nach einem der Ansprüche 1 bis 9, **dadurch gekennzeichnet, dass** ihre Breite in einem Bereich von 30 mm bis 2000 mm liegt, bevorzugt in einem Bereich von 500 mm bis 1500 mm, und bevorzugter in einem Bereich von 600 mm bis 1000 mm liegt, wobei ihre Breite bei Verwendung für Treppen bei Verwendung für Treppen besonders bevorzugt in einem Bereich von 100 mm bis 500 mm liegt, insbesondere bevorzugt in einem Bereich von 150 mm bis 350 mm liegt, bei Verwendung für Sockelleisten besonders bevorzugt in einem Bereich von 20 mm bis 150 mm liegt, insbesondere bevorzugt in einem Bereich von 30 mm bis 100 mm liegt und bei Verwendung auf Böden oder Wänden besonders bevorzugt mindestens 350 mm beträgt.

11. Selbstklebefolie nach einem der Ansprüche 1 bis 10, **dadurch gekennzeichnet, dass** die untere Oberfläche eine Haftkleberbeschichtung mit geringerer Haftstärke als die Haftstärke der Haftkleberbeschichtung an der oberen Oberfläche aufweist.

12. Selbstklebefolie nach einem der Ansprüche 1 bis 11, **dadurch gekennzeichnet, dass** zumindest die Haftkleberbeschichtung der oberen Oberfläche mit einer entfernbaren Abdeckschicht versehen ist.

13. Selbstklebefolie nach einem der Ansprüche 1 bis 12, **dadurch gekennzeichnet, dass** die Selbstklebefolie zu einer Rolle gewickelt ist.

## Claims

1. A self-adhesive film for sticking a covering, in particular a floor covering, a baseboard, or a wall covering, for example in multiple parts, to a subsurface, in particular to a floor, stairs, or a wall, which film is coated with a contact adhesive coating on an upper surface oriented toward the covering and on a lower surface oriented toward the subsurface,
**characterized in that**
the self-adhesive film has a barrier layer that is impermeable to softeners, the barrier layer being an inorganic metal layer and/or an oxide layer and/or a metal oxide layer, made of a material that is selected from among the group including aluminum, gold, silver, nickel, copper, chromium, titanium, aluminum oxide, silicon oxide, aluminum silicon oxide (vaporized or as a film) and the metal layer and/or the oxide layer and/or the metal oxide layer having a thickness of at least 10 nm up to 50 µm; the contact adhesive coating of at least one of the surfaces is composed of a contact adhesive material that is selected from among the group that includes contact adhesive materials based on acrylate, vinyl acetate, vinyl acetate ethylene, and/or mixtures and/or copolymers thereof; at least the contact adhesive coating of the upper surface is composed of such a contact adhesive, which contains in the range from 10% by weight to 50% by weight of softener in its dry matter; and the contact adhesive coating of at least one of the surfaces has a limited absorptivity for softeners that have a softener absorptivity of up to 20 g/m², measured using the measuring methods for softener absorptivity that are indicated in the description.

2. The self-adhesive film according to claim 1, **characterized in that** the limited softener absorptivity lies in the range from 2 g/m² to 20 g/m², preferably in the range from 5 g/m² to 15 g/m².

3. The self-adhesive film according to claim 1 or 2, **characterized in that** the contact adhesive coating of the upper surface has a limited absorptivity for softeners.

4. The self-adhesive film according to one of claims 1 through 3, **characterized in that** at least the contact adhesive coating of the upper surface is composed of such a contact adhesive, which contains in the range from 15% by weight to 40% by weight of a softener in its dry matter.

5. The self-adhesive film according to one of claims 1 through 4, **characterized in that** the backing layer is multilayered.

6. The self-adhesive film according to one of claims 1 through 5, **characterized in that** the barrier layer is part of the backing layer.

7. The self-adhesive film according to claim 6, **characterized in that** the barrier layer is situated on at least one side of the backing layer, preferably on an upper side that is oriented toward the covering.

8. The self-adhesive film according to claim 6, **characterized in that** the barrier layer is situated as an intermediate layer between several layers of the backing layer.

9. The self-adhesive film according to one of claims 1 through 8, **characterized in that** the backing layer is composed of a polymer material, preferably a polymer material that is selected from among the group including polyethylene, polypropylene, (aliphatic or aromatic) polyamide, (aliphatic or aromatic) polyester, polyethylene propylene, polyethylene terephthalate, polyactide, polymethyl methacrylate, polyolefins, polyvinyl butyral, or polyvinyl chloride.

10. The self-adhesive film according to one of claims 1 through 9, **characterized in that** its width lies in a range from 30 mm to 2000 mm, preferably in a range from 500 mm to 1500 mm, and particularly preferably in a range from 600 mm to 1000 mm; when used for stairs when used for stairs (sic), its width preferably lies in a range from 100 mm to 500 mm, particularly preferably in a range from 150 mm to 350 mm, and when used for baseboards, its width preferably lies in a range from 20 mm to 150 mm, particularly preferably in a range from 30 mm to 100 mm, and when used on floors or walls, its width is particularly preferably at least 350 mm.

11. The self-adhesive film according to one of claims 1 through 10, **characterized in that** the lower surface is a contact adhesive coating with an adhesive strength that is lower than the adhesive strength of the contact adhesive coating on the upper surface.

12. The self-adhesive film according to one of claims 1 through 11, **characterized in that** at least the contact adhesive coating of the upper surface is provided with a removable covering layer.

13. The self-adhesive film according to one of claims 1 through 12, **characterized in that** the self-adhesive film is wound onto a roll.

## Revendications

1. Feuille autocollante pour coller un revêtement, notamment un revêtement de sol sur le plancher, de plinthe ou un revêtement mural, par exemple en plusieurs parties, sur un substrat notamment un plancher, un escalier ou un mur, comportant une couche-support qui est enduite d'une couche de colle sur une face supérieure tournée vers le revêtement de sol et sur une face inférieure tournée vers le substrat
**caractérisée en ce que**
la feuille autocollante présente une couche-barrière qui est imperméable aux plastifiants, la couche barrière étant une couche métallique anorganique et/ou une couche d'oxyde et/ou une couche d'oxyde de métal, d'un matériau choisi dans le groupe aluminium, or, argent, nickel, cuivre, chrome, titane, oxyde d'aluminium, oxyde de silicium, aluminosilicate (vaporisé ou sous forme de feuille), la couche métallique et/ou la couche d'oxyde et/ou la couche d'oxyde de métal présentant une épaisseur d'au moins 10 nm jusqu'à 50 µm, que le revêtement de colle d'au moins une des faces est en un matériau adhésif qui est choisi dans le groupe de colles basées sur l'acrylate, vinyle acrylate, vinyle acrylate éthylène et/ou leurs mélanges et/ou leurs copolymérisats, au moins la couche de colle de la face supérieure est en une telle colle contenant entre 10 % en poids jusqu'à 50 % en poids de plastifiant en matière sèche et que la couche de colle d'au moins une des faces a une absorption limitée de plastifiants avec une capacité d'absorption de plastifiant de jusqu'à 20 g/m², mesurée selon la méthode de mesure indiquée dans la description concernant la capacité d'absorption de plastifiant.

2. Feuille autocollante selon la revendication 1, **caractérisée en ce que** la capacité d'absorption limitée de plastifiant est située dans une plage de 2 g/m² à 20 g/m², de préférence dans une plage de 5 g/m² à 15 g/m².

3. Feuille autocollante selon la revendication 1 ou 2, **caractérisée en ce que** la couche de colle sur la face supérieure a une capacité d'absorption de plastifiant limitée.

4. Feuille autocollante selon la revendication 1 à 3, **caractérisée en ce que** la couche de colle sur la face supérieure est en une telle colle dont la teneur en plastifiant est située dans une plage de 15 % en poids à 40 % en poids en substance sèche.

5. Feuille autocollante selon la revendication 1 à 4, **caractérisée en ce que** la couche-support comporte plusieurs couches.

6. Feuille autocollante selon la revendication 1 à 5, **caractérisée en ce que** la couche-barrière fait partie de la couche-support.

7. Feuille autocollante selon la revendication 6, **caractérisée en ce que** la couche-barrière est disposée sur au moins une face de la couche-support, de préférence sur la couche supérieure tournée vers le revêtement.

8. Feuille autocollante selon la revendication 6, **caractérisée en ce que** la couche-barrière est intercalée entre plusieurs couches de la couche-support.

9. Feuille autocollante selon une des revendications 1 à 8, **caractérisée en ce que** la couche- support, est en un polymère, de préférence un polymère du groupe polyéthylène, polypropylène, polyamide (aliphatique, aromatique), polyester (aliphatique, aromatique), polyéthylène propylène, polyéthylène térephtalate ester, polylactide, polyméthacrylate de méthyle, polyoléfine, polybutyral de vinyle ou chlorure de polyvinyle.

10. Feuille autocollante selon une des revendications 1 à 9, **caractérisée en ce que** sa largeur est située dans une plage de 30 mm à 2000 mm, de préférence dans une plage de 500 à 1500 mm et plus préférentiellement dans une plage de 600 mm à 1000 mm, sa largeur étant de préférence dans une plage de 100 mm à 500 mm lorsqu'elle est utilisée sur des escaliers, dans une plage de 150 mm à 350 mm, lorsqu'elle est utilisée sur des plinthes plus préférentiellement dans une plage de 20 mm à 150 mm, et encore plus préférentiellement dans une plage de 30 mm à 100 mm et lorsqu'elle est utilisée sur des sols et murs, plus préférentiellement au moins 350 mm.

11. Feuille autocollante selon une des revendications 1 à 10, **caractérisée en ce que** la face inférieure présente une couche de colle moins adhésive que la force d'adhérence de la couche de colle de la face supérieure.

12. Feuille autocollante selon une des revendications 1 à 11, **caractérisée en ce qu'**au moins la couche de colle adhésive de la face supérieure est dotée d'une couche de couverture amovible.

13. Feuille autocollante selon une des revendications 1 à 12, **caractérisée en ce que** la feuille autocollante peut être roulée en un rouleau.
